# EUROPÄISCHE PATENTSCHRIFT

(11) **EP 0 988 477 B1**
(45) Veröffentlichungstag und Bekanntmachung des Hinweises auf die Patenterteilung: **18.12.2002**
(21) Anmeldenummer: 99908862.8
(22) Anmeldetag: 09.02.1999
(51) Int. Cl.: F16H 61/46, B60K 26/00, E02F 9/22

(54) **VERFAHREN UND EINRICHTUNG ZUR LASTSCHALTBAREN UMSCHALTUNG EINES HYDROSTATISCHEN FAHRANTRIEBES EINER MOBILEN BAUMASCHINE**
METHOD AND DEVICE FOR THE POWER SHIFTABLE CHANGE-OVER OF A HYDROSTATIC VEHICLE DRIVE OF A MOBILE CONSTRUCTION MACHINE
PROCEDE ET DISPOSITIF POUR EFFECTUER UN CHANGEMENT DE RAPPORTS COUPLABLE SOUS CHARGE DANS UN SYSTEME DE TRANSMISSION HYDROSTATIQUE D'UN ENGIN MOBILE

(30) Priorität: 27.03.1998 DE 19813622
(43) Veröffentlichungstag der Anmeldung: 29.03.2000
(73) Patentinhaber: O & K ORENSTEIN & KOPPEL AG, 13581 Berlin (DE)
(72) Erfinder: KOHLMORGEN, Horst, D-44269 Dortmund (DE)
(74) Vertreter: Patentanwälte Meinke, Dabringhaus und Partner
(86) Internationale Anmeldenummer: EP9900823
(87) Internationale Veröffentlichungsnummer: WO99050575

(56) Entgegenhaltungen:
- DE-C1- 19 520 454
- DE-C1- 19 547 696
- US-A- 5 177 964

## Beschreibung

Die Erfindung betrifft ein Verfahren bzw. eine Einrichtung mit den Merkmalen gemäß Oberbegriff des Patentanspruchs 1 bzw. 9.

Es sind Mobilbagger oder vergleichbare Baumaschinen entsprechend den Merkmalen des jeweiligen Oberbegriffs mit manuell schaltbaren zweistufigen Stirnradgetrieben in Verbindung mit einem hydrostatischen Fahrantrieb oder mit einem rein hydrostatischen Fahrantrieb (Hydrotransmatik) bekannt. Das Schalten geschieht entweder durch manuellen Eingriff des Fahrers auf die Getriebeschaltung oder durch automatische oder manuelle Schaltvorgänge im hydrostatischen Fahrantrieb.

Beim manuellen Schalten des Getriebes ist nicht auszuschließen, daß der Fahrantrieb nicht in der optimalen Schaltstufe betrieben wird. Dies kann im ungünstigsten Fall sogar die Fahrsicherheit und auch die Komponenten der Baumaschine gefährden, beispielsweise, wenn ein Umschalten in einen niedrigen Gang bei zu hoher Fahrgeschwindigkeit erfolgt.

Aus DE 195 20 454 C1 der Anmelderin ist ein Verfahren und eine Einrichtung zur lastabhängigen automatischen Umschaltung wenigstens eines zweistufigen hydraulischen Fahrmotors einer mobilen Baumaschine bekannt, bei dem durch Betätigung eines Schalters mindestens zwei mit mindestens einem Schaltelement in Wirkverbindung stehende Druckschalter mit unterschiedlichen hydraulischen Ansprechdrücken nacheinander aktiviert werden, wobei über das von dem einen oder dem anderen Druckschalter in Abhängigkeit vorgegebener Lastzustände im hydraulischen Fahrkreis betätigte Umschaltventil ein die Umschaltung des Fahrmotors von seinem größten Schluckvolumen auf sein geringstes Schluckvolumen und umgekehrt bewirkendes Ventil elektrisch angesteuert wird. Dieses bekannte Verfahren betrifft somit eine automatische Umschaltung eines zweistufigen hyraulischen Fahrmotors, betrifft jedoch kein gattungsgemäßes Verfahren, bei dem ein Lastschaltgetriebe umgeschaltet werden soll.

Aufgabe der Erfindung ist es, ein gattungsgemäßes Verfahren und eine gattungsgemäße Einrichtung derart weiterzubilden, daß lastabhängig zwischen den Schaltstufen des Lastschaltgetriebes betriebssicher automatisch umgeschaltet werden kann, so daß der gesamte Fahrbereich von Minimal- bis Höchstgeschwindigkeit bei unterschiedlichen Fahrwiderständen ohne manuelles Umschalten durchfahren werden kann. Außerdem soll die Fahrsicherheit erhöht und eine Gefährdung der Baumaschinenkomponenten beim Schaltvorgang sicher vermieden werden.

Diese Aufgabe wird mit einem Verfahren der eingangs bezeichneten Art erfindungsgemäß durch die kennzeichnenden Merkmale des Patentanspruchs 1 gelöst.

Erfindungsgemäß wird somit eine automatische Umschaltung zur Verfügung gestellt, die vom Fahrer durch Betätigung eines Schalters aktivierbar ist. Dabei wird mit Hilfe von zwei Druckschaltern und einem Relais (Schaltelement) oder gleichwirkenden Einrichtungen ein Schaltfenster erzeugt, welches zum einen das automatische Umschalten in beide Richtungen (Stufe 1 nach Stufe 2 und Stufe 2 nach Stufe 1) ermöglicht und andererseits unnötig häufiges Umschalten verhindert. Das Umschalten erfolgt in Abhängigkeit vom hydrostatischen Druck im Fahrkreis (Maximal- oder Minimalwert).

Zur Erhöhung der Fahrsicherheit und der Sicherheit der Maschinenkomponenten beim Umschalten ist erfindungsgemäß vorgesehen, daß die Fahrgeschwindigkeit der Baumaschine überwacht und bei Überschreiten eines vorgegebenen Geschwindigkeitswertes ein Zurückschalten des Lastschaltgetriebes verhindert wird. Dies läßt sich besonders vorteilhaft dadurch erreichen, daß zur Überwachung der Fahrgeschwindigkeit ein fahrgeschwindigkeitsproportionales Frequenzsignal von einer Auswerteeinheit bewertet und über einen frequenzabhängigen Schalter das Umschalten ermöglicht oder verhindert wird.

Ein unproblematisches Umschalten in eine niedrige Schaltstufe ist deshalb immer nur dann möglich, wenn die Fahrgeschwindigkeit der Baumaschine dies unproblematisch zuläßt. Dazu wird ein fahrgeschwindigkeitsproportionales Frequenzsignal (Tachometersignal) von einer entsprechenden Einheit bewertet. Nur wenn die Fahrgeschwindigkeit (Frequenz) innerhalb eines vorgegebenen Schaltfensters liegt, kann eine Umschaltung erfolgen.

Vorzugsweise ist verfahrensmäßig weiterhin vorgesehen, daß der frequenzabhängige Schalter auf das Umschaltventil einwirkt. Alternativ kann auch vorgesehen sein, daß der frequenzabhängige Schalter auf ein zusätzliches Ventileinwirkt, welches parallel zum Umschaltventil angeordnet und mit diesem hydraulisch verknüpft ist.

Ferner ist vorteilhaft vorgesehen, daß das Hochschalten des Lastschaltgetriebes ausschließlich lastabhängig über die Druckschalter erfolgt. Dazu ist der frequenzabhängige Schalter über geeignete Elemente, beispielsweise Relais, mit dem Umschaltventil zu verbinden, um die frequenzabhängige Schaltung so einzurichten, daß sie nur für das Herunterschalten wirksam ist.

Weiterhin ist vorteilhaft vorgesehen, daß die Fahrgeschwindigkeit der Baumaschine überwacht und bei Stillstand der Baumaschine automatisch eine Rückschaltung in den niedrigsten Gang des Lastschaltgetriebes erfolgt. Dies kann zweckmäßigerweise ebenfalls über den frequenzabhängigen Schalter erfolgen, über den festgestellt werden kann, ob das Fahrzeug steht oder nicht. Hierzu kann auch ein zusätzlicher frequenzabhängiger Schalter vorgesehen werden.

In weiterer vorteilhafter Ausgestaltung ist vorgesehen, daß der untere Ansprechdruck der Druckschalter so eingestellt wird, daß er einem Druck der Regelpumpe im Bereich ihrer maximalen Fördermenge entspricht.

Ferner ist verfahrensmäßig vorgesehen, daß der obere Ansprechdruck der Druckschalter so eingestellt wird, daß er im Bereich des maximalen Systemdruckes liegt.

Zur Lösung der eingangs gestellten Aufgabe schlägt die Erfindung auch eine Einrichtung mit den Merkmalen des Patentanspruchs 9 vor.

Der Schalter befindet sich üblicherweise im Fahrerhaus der Baumaschine und bewirkt die Wahl zwischen manueller und automatischer Schaltung. Das mit den Druckschaltern verbundene Schaltelement kann vorzugsweise als Relais ausgebildet sein.

Vorteilhaft steht dabei der frequenzabhängige Schalter mit dem Umschaltventil in Wirkverbindung. Alternativ kann aber auch vorgesehen sein, daß der freguenzabhängige Schalter mit einem zusätzlichen Ventil in Wirkverbindung steht, das parallel zum Umschaltventil angeordnet und mit diesem hydraulisch verknüpft ist.

Besonders vorteilhaft ist vorgesehen, daß der frequenzabhängige Schalter einen ersten Ausgang aufweist, der über ein Relais mit dem Umschaltventil in Wirkverbindung steht. Über dieses Relais ist es möglich, das frequenzund damit geschwindigkeitsabhängige Schalten nur bei Verringerung der Geschwindigkeit, d.h. beim Herunterschalten des Lastschaltgetriebes, wirksam werden zu lassen, um zu vermeiden, daß ein lastunabhängiges Hochschalten erfolgt. Damit ist gewährleistet, daß das Hochschalten nur lastabhängig erfolgt.

Weiterhin ist vorteilhaft vorgesehen, daß der frequenzabhängige Schalter einen zweiten Ausgang aufweist, der über ein weiteres Relais mit dem Umschaltventil in Wirkverbindung steht, wobei das weitere Relais zwischen dem Umschaltelement und dem Schalter sowie dem Relais angeordnet ist. Durch das Vorsehen dieses weiteren Relais ist es möglich, automatisch bei Stillstand des Fahrzeuges eine Schaltung in den ersten Gang zu bewirken.

Der frequenzabhängige Schalter kann in der vorbeschriebenen Weise zwei Ausgänge aufweisen, alternativ kann auch vorgesehen sein, daß der frequenzabhängige Schalter von zwei getrennten Schältern mit jeweils einem Ausgang gebildet ist.

Anstelle der vorbeschriebenen einzelnen Bauelemente kann auch vorgesehen sein, daß die Druckschalter, das Schaltelement, der frequenzabhängige Schalter und die Relais als gemeinsame elektronische, hydraulische oder pneumatische Schaltlogik ausgebildet sind.

Die Erfindung ist nachstehend anhand der Zeichnung beispielsweise näher erläutert. Diese zeigt in:
- Fig. 1: eine Prinzipskizze eines Funktionsplanes zur automatischen Umschaltung eines zweistufigen Lastschaltgetriebes eines hydrostatischen Fahrantriebes einer mobilen Baumaschine und
- Fig. 2: ein Flußdiagramm zur Verdeutlichung der Schaltvorgänge.

Ein beispielhaft dargestellter hydrostatischer Fahrantrieb einer mobilen Baumaschine weist einen allgemein mit 2, 10 bezeichneten Fahrkreis und ein mit diesem verbundenes Lastschaltgetriebe 1 auf, welches beim dargestellten Ausführungsbeispiel zweistufig ist, also einen ersten und einen zweiten Gang aufweist. Das Lastschaltgetriebe 1 weist zwei Abtriebsachsen auf, die als Antrieb für die Lenkachse und als Antrieb für die Starrachse der Baumaschine dienen.

Der Fahrkreis 2, 10 weist die üblichen Elemente auf, die im einzelnen an dieser Stelle nicht näher erläutert werden. Nicht dargestellt ist eine hydrostatische Regelpumpe, die nur durch einen Pfeil 10 angedeutet ist. Im Fahrkreis 2, 10 ist ein hydraulisches Wechselventil 11 angeordnet.

Über dieses hydraulische Wechselventil 11 sind an den Fahrkreis zwei parallele Druckschalter 3 und 4 angeschlossen, die als Schaltelemente dienen und unterschiedliche hydraulische Ansprechdrücke aufweisen. Beide Druckschalter 3 und 4 sind als Öffner ausgebildet. Der Druckschalter 3 weist einen kleineren hydraulischen Ansprechdruck auf als der Druckschalter 4. Beide Druckschalter 3 und 4 sind mit einem vorzugsweise von einem Relais gebildeten Schaltelement 5 verbunden sowie mit einem Schalter 7, der im Fahrerhaus der Baumaschine angeordnet ist. Diese Schaltanordnung wirkt auf ein 4/2-Wegeventil, das nachfolgend als Umschaltventil 6 bezeichnet wird. Mit diesem Umschaltventil 6 ist ein Umschalten des Lastschaltgetriebes 1 vom ersten Gang in den zweiten Gang oder umgekehrt möglich.

Die Schaltanordnung weist darüber hinaus einen frequenzabhängigen Schalter 9 auf, der mit einem Initiator 8 verbunden ist, der im Bereich der Starrachse des Antriebes der Baumaschine angeordnet ist oder an einem anderen abtriebsseitigen Ort des Getriebes angeordnet sein kann.

Der frequenzabhängige Schalter 9 weist zwei Ausgänge auf, wobei der erste Ausgang über ein Relais 12 mit dem Umschaltventil 6 verbunden ist. Der zweite Ausgang des frequenzabhängigen Schalters 9 ist über ein Relais 13 mit dem Umschaltventil 6 verbunden, wobei das Relais 13 zwischen dem Umschaltventil 6 und dem Schalter 7 im Fahrerhaus sowie dem Relais 12 und dem frequenzabhängigen Schalter 9 angeordnet ist. Die Funktion dieser Bauelemente wird nachfolgend noch näher beschrieben.

Im dargestellten stromlosen Ruhezustand steht das elektrisch vorgesteuerte Umschaltventil 6 so, daß der erste Gang geschaltet ist. In diesem Zustand sind die beiden Druckschalter 3 und 4 geschlossen. Mit dem Schalter 7 im Fahrerhaus kann eine Wahl getroffen werden zwischen Automatik in geschlossener Stellung und fixiertem ersten Gang in geöffneter Position.

Unabhängig von der Schalterstellung 7 bewirkt das weitere Relais 13 ein Umschalten in den ersten Gang durch Öffnen im Stillstand der Baumaschine. Im folgenden wird der Zustand "Automatik" beschrieben:

Das Anfahren aus dem Stillstand erfolgt immer im ersten Gang, weil das im Stillstand geöffnete Relais 13 dieses bewirkt. Bei Geschwindigkeiten größer als 0 wird lastdruckabhängig ggf. in den 2. Gang geschaltet.

Solange im 2. Gang ein Druck im Fahrkreis 2, 10 auftritt, der niedriger ist als der Ansprechdruck des Druckschalters 3 sind beide Druckschalter 3 und 4 und das Schaltelement 5 geschlossen und der zweite Gang bleibt geschaltet. Steigt der Druck im Fahrkreis 2, 10, wobei je nach Fahrrichtung der jeweils höhere Druck im Fahrkreis über das Wechselventil 11 an den Druckschaltern 3 und 4 anliegt, so öffnet zuerst der Druckschalter 3, was aber noch keine Auswirkung hat, und bei Erreichen eines entsprechend höheren Druckes auch der Druckschalter 4. Dies bewirkt jetzt, daß das Schaltelement 5 öffnet und damit ein Signal zum Schalten in den ersten Gang gibt. Der erste Gang wird allerdings durch Umschalten des Umschaltventiles 6 nur dann geschaltet, wenn auch der frequenzabhängige Schalter 9 geöffnet ist. Der Schalter 9 arbeitet in seinem ersten Schaltausgang als Öffner, wenn ein vorgegebenes, fahrgeschwindigkeitsabhängiges Frequenzsignal vom Initiator 8 einen Grenzwert unterschreitet. Dadurch läßt sich bei schnell fahrenden mobilen Baumaschinen ein gefährliches Umschalten vom höheren in einen niedrigen Gang bei unzulässig hoher Fahrgeschwindigkeit verhindern.

Gleichermaßen wird dadurch auch ein manuelles Umschalten in den ersten Gang verhindert.

In Reihe zu dem ersten Ausgang des frequenzabhängigen Schalters 9 liegt das Relais 12, das so elektrisch verschaltet ist, daß ein Umschalten vom ersten in den zweiten Gang nur in Abhängigkeit vom Lastdruck im Fahrkreis und nicht geschwindigkeitsabhängig erfolgt.

Der Hydromotor des Fahrkreises 2 wird während des Druckanstieges auf Qₘₐₓ ausgeschwenkt (innere Regelung im Fahrkreis 2, 10), während die Pumpe 10 auf ihrer maximalen Leistungshyperbel auf eine kleinere Fördermenge zurückgeregelt wird.

Für die gleiche Fahrgeschwindigkeit im ersten Gang, wie vor dem Umschalten im zweiten Gang geht die Hauptpumpe (Fahren) aufgrund des fallenden hydraulischen Arbeitsdruckes wieder auf eine höhere Fördermenge und der hydrostatische Fahrmotor auf ein kleines Schluckvolumen.

Dabei fließt trotz des niedrigeren hydraulischen Arbeitsdruckes und des verringerten Schluckvolumens des Hydromotors aufgrund der geänderten Getriebeübersetzung annähernd das gleiche Getriebeabtriebsmoment zu den Achsen.

Bei weiter steigendem Fahrwiderstand kann das Getriebeabtriebsmoment durch einen höheren Arbeitsdruck im Fahrkreis 2, 10 und ein größeres Schluckvolumen des Hydromotors der Triebkrafthyperbel folgend (maximale Leistung) bis zum maximalen Drehmoment (Getriebeabtrieb) gesteigert werden, wobei die Fahrgeschwindigkeit entsprechend zurückgeht.

Verringert sich der Fahrwiderstand und damit der Druck im Fahrkreis wieder, so schließt als erstes der Druckschalter 4. Dies hat aber aufgrund der elektrischen Verschaltung noch keinen Einfluß, da das Schaltelement 5 elektrisch noch unversorgt bleibt (erster Gang bleibt geschaltet). Erst beim Erreichen des Schaltdruckes des Druckschalters 3 wird das Schaltelement 5 mit elektrischer Spannung versorgt und schließt. Dies hat zur Folge, daß das Umschaltventil 6 umschaltet und ein Schaltvorgang in die zweite Getriebestufe (zweiter Gang) erfolgt. Die geänderte Getriebeübersetzung bewirkt einen höheren Druck im Fahrkreis, der wiederum eine Anpassung des Schluckvolumens der Fahrpumpe 10 zur Folge hat. Bei weiter fallendem Fahrwiderstand folgt der hydrostatische Fahrantrieb der Triebkrafthyperbel bei maximaler Antriebsleistung bis zur Höchstgeschwindigkeit.

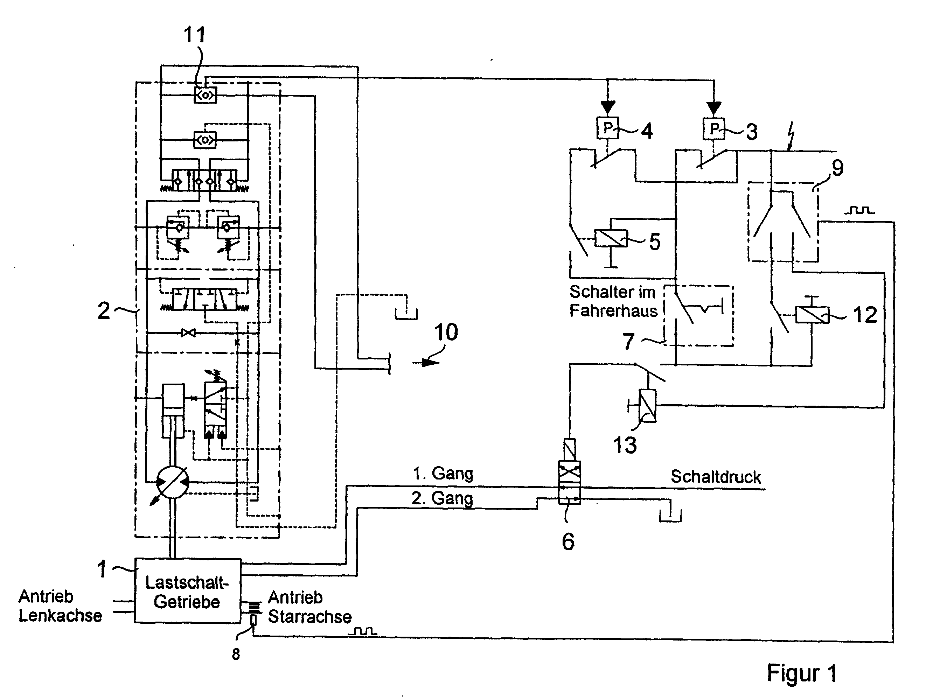

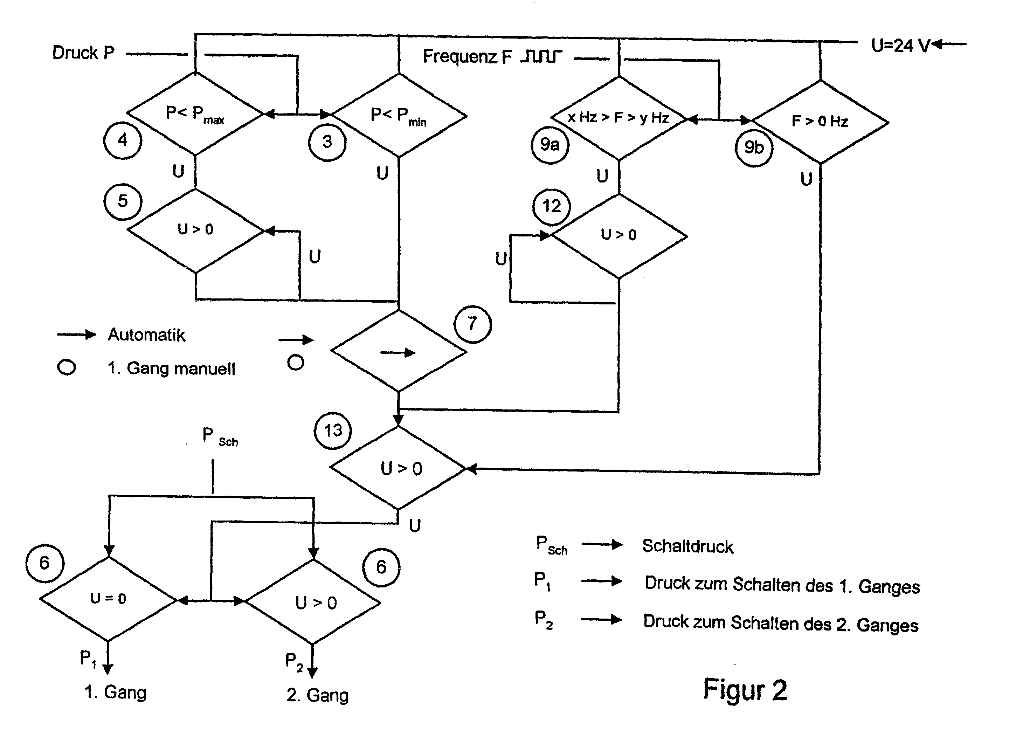

Der vorbeschriebene Funktionsablauf ist auch im Flußdiagramm der Figur 2 dargestellt, aus dem die einzelnen Schaltbedingungen genauer zu entnehmen sind. Dabei sind dieselben Bezugszeichen wie in Figur 1 verwandt, lediglich der erste Ausgang des Schalters 9 ist mit 9a bezeichnet und der zweite Ausgang mit 9b. Die elektrische Spannung ist mit der üblichen Bezeichnung U, die Frequenz mit F und der Druck mit P bezeichnet.

Aus den Figuren 1 und 2 geht für die einzelnen Elemente jeweils folgende Schaltstellung hervor:

Der Druckschalter 3 ist bei höherem Druck geöffnet. Dies bedeutet, daß kein Signal auf das Schaltelement 5 und den Schalter 7 gegeben wird. Bei niedrigem Druck ist der Druckschalter 3 geschlossen und es gibt ein Signal auf das Schaltelement 5 und den Schalter 7.

Der Druckschalter 4 ist unterhalb des Maximaldruckes Pₘₐₓ geschlossen und es liegt eine Spannung am Schaltelement 5 an.

Das Schaltelement 5 ist im ersten Gang des Lastschaltgetriebes 1 offen und im zweiten Gang geschlossen.

Der Schalter 7 kann manuell geöffnet oder geschlossen werden. Ist er offen, ist der erste Gang fixiert, ist er geschlossen, wird automatisch der erste oder zweite Gang geschaltet.

Der Schalter 9 hat beim dargestellten Ausführungsbeispiel zwei Ausgänge, wenn der erste Ausgang 9a (Schaltfenster) offen ist, ist die Spannung unterbrochen, es erfolgt eine Schaltung gemäß der Logik der Elemente 3, 4, 5 und 7. Ist der erste Ausgang geschlossen, wird eine Spannung an das Relais 12 geleitet.

Wenn der zweite Ausgang 9b des Schalters 9 offen ist (bei Frequenz 0) liegt kein Schaltsignal am Relais 13 (wie dargestellt). Der zweite Ausgang 9b ist geschlossen bei einer Frequenz größer 0, was bedeutet, daß ein Schaltsignal an das Relais 13 geliefert wird.

Das Relais 12 ist im ersten Gang offen und im zweiten Gang geschlossen.

Ist das weitere Relais 13 offen, so ist der erste Gang geschaltet und im geschlossenen Zustand ist der erste oder der zweite Gang geschaltet, je nach Stellung der Elemente 12, 7 und 5.

## Patentansprüche

1. Verfahren zur lastschaltbaren Umschaltung eines hydrostatischen Fahrantriebes einer mobilen Baumaschine, die wenigstens eine hydrostatische Regelpumpe, einen geregelten hydrostatischen Fahrmotor und ein wenigstens zweistufiges Lastschaltgetriebe (1) aufweist, das über seine Abtriebswelle die Achsen der Baumaschine antreibt, wobei das Lastschaltgetriebe über Pneumatik, Hydraulikdruck oder elektrische Spannung über wenigstens ein Umschaltventil (6) geschaltet wird,
**dadurch gekennzeichnet,**
**daß** zur lastabhängigen automatischen Umschaltung des Lastschaltgetriebes (1) durch Betätigung eines Schalters (7) wenigstens zwei mit wenigstens einem Schaltelement (5) in Wirkverbindung stehende Druckschalter (3,4) mit unterschiedlichen hydraulischen Ansprechdrücken nacheinander betätigt werden, wobei von dem einen oder dem anderen Druckschalter (3,4) in Abhängigkeit vorgegebener Lastzustände im hydraulischen Fahrkreis das Schaltelement (5) betätigt wird und dieses das Umschaltventil (6) zur Bewirkung der Umschaltung des Lastschaltgetriebes (1) elektrisch ansteuert, wobei die Fahrgeschwindigkeit der Baumaschine überwacht und bei Überschreiten eines vorgegebenen Geschwindigkeitswertes ein Zurückschalten des Lastschaltgetriebes (1) verhindert wird.

2. Verfahren nach Anspruch 1,
**dadurch gekennzeichnet,**
**daß** zur Überwachung der Fahrgeschwindigkeit ein fahrgeschwindigkeitsproportionales Frequenzsignal von einer Auswerteeinheit bewertet und über einen frequenzabhängigen Schalter (9) das Umschalten ermöglicht oder verhindert wird.

3. Verfahren nach Anspruch 2,
**dadurch gekennzeichnet,**
**daß** der frequenzabhängige Schalter (9) auf das Umschaltventil (6) einwirkt.

4. Verfahren nach Anspruch 2,
**dadurch gekennzeichnet,**
**daß** der frequenzabhängige Schalter (9) auf ein zusätzliches Ventil einwirkt, welches parallel zum Umschaltventil (6) angeordnet und mit diesem hydraulisch verknüpft ist.

5. Verfahren nach Anspruch 2, 3 oder 4,
**dadurch gekennzeichnet,**
**daß** das Hochschalten des Lastschaltgetriebes (1) ausschließlich lastabhängig über die Druckschalter (3,4) erfolgt.

6. Verfahren nach Anspruch 1 oder einem der folgenden,
**dadurch gekennzeichnet,**
**daß** die Fahrgeschwindigkeit der Baumaschine überwacht und bei Stillstand der Baumaschine automatisch eine Rückschaltung in den niedrigsten Gang des Lastschaltgetriebes (1) erfolgt.

7. Verfahren nach Anspruch 1 oder einem der folgenden,
**dadurch gekennzeichnet,**
**daß** der untere Ansprechdruck der Druckschalter (3,4) so eingestellt wird, daß er einem Druck der Regelpumpe im Bereich ihrer maximalen Fördermenge entspricht.

8. Verfahren nach Anspruch 1 oder einem der folgenden,
**dadurch gekennzeichnet,**
**daß** der obere Ansprechdruck der Druckschalter (3,4) so eingestellt wird, daß er im Bereich des maximalen Systemdruckes liegt.

9. Einrichtung zur lastschaltbaren Umschaltung eines hydrostatischen Fahrantriebes einer mobilen Baumaschine, die wenigstens eine hydrostatische Regelpumpe, einen geregelten hydrostatischen Fahrmotor und ein wenigstens zweistufiges Lastschaltgetriebe (1) aufweist, das über seine Abtriebswelle die Achsen der Baumaschine antreibt, wobei das Lastschaltgetriebe über Pneumatik, Hydraulikdruck oder elektrische Spannung über wenigstens ein Umschaltventil (6) schaltbar ist,
**dadurch gekennzeichnet,**
**daß** zur lastabhängigen automatischen Umschaltung des Lastschaltgetriebes (1) ein Schalter (7) und wenigstens zwei Druckschalter (3,4) mit unterschiedlichen hydraulischen Ansprechdrücken vorgesehen sind, wobei die Druckschalter (3,4) in Wirkverbindung mit einem Schaltelement (5) stehen, das mit dem Umschaltventil (6) verbunden ist und dieses elektrisch ansteuert, wobei eine Auswerteeinheit zur Überwachung der Fahrgeschwindigkeit und ein mit dieser verbundener frequenzabhängiger Schalter (9) vorgesehen ist, der das Umschalten des Lastschaltgetriebes (1) ermöglicht oder verhindert.

10. Einrichtung nach Anspruch 9,
**dadurch gekennzeichnet,**
**daß** der frequenz abhängige Schalter (9) mit dem Umschaltventil (6) in Wirkverbindung steht.

11. Einrichtung nach Anspruch 9,
**dadurch gekennzeichnet,**
**daß** der frequenzabhängige Schalter (9) mit einem zusätzlichen Ventil in Wirkverbindung steht, das parallel zum Umschaltventil (6) angeordnet und mit diesem hydraulisch verknüpft ist.

12. Einrichtung nach Anspruch 10,
**dadurch gekennzeichnet,**
**daß** der frequenzabhängige Schalter (9) einen ersten Ausgang aufweist, der über ein Relais (12) mit dem Umschaltventil (6) in Wirkverbindung steht.

13. Einrichtung nach Anspruch 12,
**dadurch gekennzeichnet,**
**daß** der frequenzabhängige Schalter (9) einen zweiten Ausgang aufweist, der über ein weiteres Relais (13) mit dem Umschaltventil (6) in Wirkverbindung steht, wobei das weitere Relais (13) zwischen dem Umschaltelement (6) und dem Schalter (7) sowie dem Relais (12) angeordnet ist.

14. Einrichtung nach Anspruch 13,
**dadurch gekennzeichnet,**
**daß** der frequenzabhängige Schalter (9) von zwei getrennten Schaltern mit jeweils einem Ausgang gebildet ist.

15. Einrichtung nach Anspruch 9 oder einem der folgenden,
**dadurch gekennzeichnet,**
**daß** die Druckschalter (3,4), das Schaltelement (5), der frequenzabhängige Schalter (9) und die Relais (12,13) als gemeinsame elektronische, hydraulische oder pneumatische Schaltlogik ausgebildet sind.

## Claims

1. Method for the power-shiftable changeover of a hydrostatic vehicle drive of a mobile construction machine that has at least one hydrostatic variable-capacity pump, an automatically regulated hydrostatic propelling motor and a not less than two-stage power-shift transmission (1) which via its output shaft drives the axles of the construction machine, the power-shift transmission being operated pneumatically, by hydraulic pressure or by electrical voltage, via at least one changeover valve (6),
**characterised in that** for the load-dependent automatic changeover of the power-shift transmission (1) by the operation of a switch (7), at least two pressure switches (3, 4) operatively connected to at least one switch element (5) and responding at different hydraulic pressures are operated one after the other, the switch element (5) being operated by one or the other pressure switch (3, 4) in dependence on preset load states in the hydraulic propulsion circuit, and said switch element (5) energising the changeover valve (6) so as to effect the changeover of the power-shift transmission (1), the travelling speed of the construction machine being monitored and the power-shift transmission (1) being prevented from re-engaging in the event that a preset speed level is exceeded.

2. Method according to claim 1,
**characterised in that** for monitoring the travelling speed, an evaluator assesses a frequency signal proportional to the travelling speed and a frequency-dependent switch (9) enables or prevents the changeover.

3. Method according to claim 2,
**characterised in that** the frequency-dependent switch (9) acts on the changeover valve (6).

4. Method according to claim 2,
**characterised in that** the frequency-dependent switch (9) acts on an additional valve which is disposed parallel to the changeover valve (6) and is hydraulically linked thereto.

5. Method according to claim 2, 3 or 4,
**characterised in that** upshifting of the power-shift transmission (1) takes place in an exclusively load-dependent manner via the pressure switches (3, 4).

6. Method according to claim 1 or any of those following,
**characterised in that** the travelling speed of the construction machine is monitored and when the construction machine is stationary the lowest gear of the power-shift transmission (1) is automatically reengaged.

7. Method according to claim 1 or any of those following,
**characterised in that** the lower response pressure of the pressure switches (3, 4) is set so as to correspond to a variable-capacity pump pressure in the region of its maximum capacity.

8. Method according to claim 1 or any of those following,
**characterised in that** the upper response pressure of the pressure switches (3, 4) is set so as to be in the region of the maximum system pressure.

9. Device for the power-shiftable changeover of a hydrostatic vehicle drive of a mobile construction machine that has at least one hydrostatic variable-capacity pump, an automatically regulated hydrostatic propelling motor and a not less than two-stage power-shift transmission (1) which via its output shaft drives the axles of the construction machine, the power-shift transmission being adapted to be operated pneumatically, by hydraulic pressure or by electrical voltage via at least one changeover valve (6),
**characterised in that** for the load-dependent automatic changeover of the power-shift transmission (1) a switch (7) and at least two pressure switches (3, 4) responding at different hydraulic response pressures, the pressure switches (3, 4) being operatively connected to a switch element (5) which is connected to the changeover valve (6) and energises the latter, there being provided an evaluator for monitoring the travelling speed and, connected thereto, a frequency-dependent switch (9) which enables or prevents the changeover of the power-shift transmission (1).

10. Device according to claim 9,
**characterised in that** the frequency-dependent switch (9) is operatively connected to the changeover switch (6).

11. Device according to claim 9,
**characterised in that** the frequency-dependent switch (9) is operatively connected to an additional valve that is disposed parallel to the changeover valve (6) and is hydraulically linked thereto.

12. Device according to claim 10,
**characterised in that** the frequency-dependent switch (9) has a first output which is operatively connected to the changeover valve (6) via a relay (12).

13. Device according to claim 12,
**characterised in that** the frequency-dependent switch (9) has a second output which is operatively connected to the changeover valve (6) via a further relay (13), the further relay (13) being arranged between the changeover element (6) and the switch (7) and the relay (12).

14. Device according to claim 13,
**characterised in that** the frequency-dependent switch (9) is constituted by two separate switches with a respective output in each case.

15. Device according to claim 9 or any of those following,
**characterised in that** the pressure switches (3, 4), the switch element (5), the frequency-dependent switch (9) and the relays (12, 13) are configured as a common electronic, hydraulic or pneumatic switching logic system.

## Revendications

1. Procédé pour effectuer un changement de rapports de couplage sous charge dans un système de transmission hydrostatique d'un engin de chantier mobile qui comporte au moins une pompe hydrostatique à débit variable, un moteur de traction hydrostatique asservi et une boîte de vitesse (1) à au moins deux étages qui entraîne les axes de l'engin de chantier par l'intermédiaire de son arbre de sortie, la boîte de vitesse étant commutée par pression pneumatique, hydraulique ou par tension électrique par l'intermédiaire d'au moins une soupape d'inversion (6), **caractérisé en ce que**, pour le changement automatique de rapports de couplage de la boîte de vitesse (1) en fonction de la charge par l'actionnement d'un commutateur (7), au moins deux pressostats (3, 4) connectés activement à au moins un élément de couplage (5) sont actionnés l'un après l'autre avec des pressions de réponse hydrauliques différentes, moyennant quoi l'élément de couplage (5) est actionné par l'un ou l'autre des pressostats (3, 4) en fonction d'états de charge prédéterminés dans le circuit de traction hydraulique et commande électriquement la soupape d'inversion (6) pour provoquer le changement de rapports de couplage de la boîte de vitesse (1), moyennant quoi la vitesse de roulement de l'engin de chantier est surveillée et, en cas de dépassement d'une valeur de vitesse prédéterminée, la boîte de vitesse (1) ne peut pas rétrograder.

2. Procédé selon la revendication 1, **caractérisé en ce que**, pour surveiller la vitesse de roulement, un signal de fréquence proportionnel à la vitesse de roulement 'est évalué par une unité d'évaluation et permet ou empêche le changement de rapports de couplage par l'intermédiaire d'un commutateur (9) assujetti à la fréquence.

3. Procédé selon la revendication 2, **caractérisé en ce que** le commutateur (9) assujetti à la fréquence agit sur la soupape d'inversion (6).

4. Procédé selon la revendication 2, **caractérisé en ce que** le commutateur (9) assujetti à la fréquence agit sur une autre soupape qui est disposée parallèlement à la soupape d'inversion (6) et qui est reliée hydrauliquement à cette dernière.

5. Procédé selon la revendication.2, 3 ou 4, **caractérisé en ce que** le changement de vitesse vers le haut de la boîte de vitesse (1) se fait exclusivement en fonction de la charge par l'intermédiaire des pressostats (3, 4).

6. Procédé selon la revendication 1 ou l'une des revendications suivantes, **caractérisé en ce que** la vitesse de marche de l'engin de chantier est surveillée et **en ce que**, en cas d'arrêt de l'engin de chantier, il se produit une rétrogradation automatique à la vitesse la plus lente de la boîte de vitesse (1).

7. Procédé selon la revendication 1 ou l'une des revendications suivantes, **caractérisé en ce que** la pression de réponse inférieure des pressostats (3, 4) est réglée de manière à correspondre à une pression de la pompe à débit variable dans la plage de son débit de refoulement maximal.

8. Procédé selon la revendication 1 ou l'une des revendications suivantes, **caractérisé en ce que** la pression de réponse supérieure des pressostats (3, 4) est réglée de manière à se trouver dans la plage de pression maximale du circuit.

9. Dispositif pour le changement de rapports de couplage sous charge dans un système de transmission hydrostatique d'un engin de chantier mobile qui comporte au moins une pompe hydrostatique à débit variable, un moteur de traction hydrostatique asservi et une boîte de vitesse (1) à au moins deux étages qui entraîne les axes de l'engin de chantier par l'intermédiaire de son arbre de sortie, la boîte de vitesse étant commutée par pression pneumatique, hydraulique ou par tension électrique par l'intermédiaire d'au moins une soupape d'inversion (6), **caractérisé en ce que**, pour le changement automatique de rapports de couplage de la boîte de vitesse (1) en fonction de la charge, un commutateur (7) et au moins deux pressostats (3, 4) avec des pressions de réponse hydrauliques différentes sont prévus, moyennant quoi les pressostats (3, 4) sont connectés activement à un élément de couplage (5) qui est relié à la soupape d'inversion (6) et qui la commande électriquement, moyennant quoi une unité d'évaluation pour la surveillance de la vitesse de marche et un commutateur (9) assujetti à la fréquence relié à cette unité sont prévus et permettent ou empêchent le changement de rapports de couplage de la boîte de vitesse (1).

10. Dispositif selon la revendication 9, **caractérisé en ce que** le commutateur (9) assujetti à la fréquence (9) est connecté activement à la soupape d'inversion (6).

11. Dispositif selon la revendication 9, **caractérisé en ce que** le commutateur (9) assujetti à la fréquence est connecté activement à une autre soupape qui est disposée parallèlement à la soupape d'inversion (6) et qui est reliée hydrauliquement à cette dernière.

12. Dispositif selon la revendication 10, **caractérisé en ce que** le commutateur (9) assujetti à la fréquence comporte une première sortie qui est connectée activement à la soupape d'inversion (6) par l'intermédiaire d'un relais (12).

13. Dispositif selon la revendication 12, **caractérisé en ce que** le commutateur (9) assujetti à la fréquence comporte une deuxième sortie qui est connectée activement à la soupape d'inversion (6) par l'intermédiaire d'un autre relais (13), l'autre relais (13) étant disposé entre l'élément d'inversion (6) et le commutateur (7) ainsi que le relais (12).

14. Dispositif selon la revendication 13, **caractérisé en ce que** le commutateur (9) assujetti à la fréquence est formé de deux commutateurs séparés avec chacun une sortie.

15. Dispositif selon la revendication 9 ou l'une des revendications suivantes, **caractérisé en ce que** les pressostats (3, 4), l'élément de couplage (5), le commutateur (9) assujetti à la fréquence et les relais (12, 13) sont conçus comme un circuit logique électronique, hydraulique ou pneumatique commun.
